Europäisches Patentamt

(19) European Patent Office

Office européen des brevets

(11) Veröffentlichungsnummer: **0 062 336**
**B1**

(12) # EUROPÄISCHE PATENTSCHRIFT

(45) Veröffentlichungstag der Patentschrift:
18.07.84

(51) Int. Cl.³: **G 11 B 3/00**, G 11 B 3/44

(21) Anmeldenummer: **82102851.1**

(22) Anmeldetag: **03.04.82**

(54) Einrichtung und Verfahren zum Schneiden einer Information in einen metallischen Schneidträger.

(30) Priorität: **08.04.81 DE 3114108**

(43) Veröffentlichungstag der Anmeldung:
**13.10.82 Patentblatt 82/41**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**DE - A - 2 216 051**
**DE - A - 2 811 888**
**DE - A - 2 935 579**
**FR - A - 1 055 547**
**GB - A - 727 424**
**US - A - 3 824 352**

(73) Patentinhaber: **TELDEC TELEFUNKEN-DECCA**
**SCHALLPLATTEN GMBH, Heussweg 25,**
**D-2000 Hamburg 19 (DE)**

(72) Erfinder: **Redlich, Horst, Plassstrasse 3a,**
**D-1000 Berlin 37 (DE)**

(74) Vertreter: **Einsel, Robert, Dipl.-Ing., Theodor-Stern-Kai 1,**
**D-6000 Frankfurt/Main 70 (DE)**

**Beschreibung**

Die Erfindung betrifft eine Einrichtung und ein Verfahren zum Schneiden einer Information in einen metallischen Schneidträger nach den Oberbegriffen der Patentansprüche 1 und 10.

Es ist bekannt, zur Herstellung von Schall- oder Videoplatten eine Information in einen Schneidträger zu schneiden, von dem auf galvanischem Wege Abzüge hergestellt werden. Durch mehrfaches Umkopieren und Vervielfältigen dieser Abzüge wird ein endgültiger Aufzeichnungsträger gewonnen, der gegenüber dem Original praktisch nicht verschlechtert ist. Sämtliche eventuellen Fehler und Ungenauigkeiten des Schneidträgers würden jedoch auch auf sämtliche Zwischenträger und auf den endgültigen Aufzeichnungsträger übertragen werden. Das Schneiden der Information in den Schneidträger muß daher mit möglichst hoher Genauigkeit durchgeführt werden.

Es ist üblich, das Schneiden der Information in eine sogenannte Lackfolie vorzunehmen. Aus der DE-OS 2 629 492 ist es aber auch schon bekannt, für eine Videoaufzeichnung anstelle einer Lackfolie einen metallischen Schneidträger, insbesondere aus Kupfer, zu verwenden. Kupfer ist wesentlich härter als eine Lackfolie, und die dabei erreichte Qualität ist höher als bei herkömmlichen Lackaufzeichnungen. Es ist ferner aus der DE-PS 2 811 888 bekannt, als Schneidträger Kupfer mit einer Vickershärte zwischen 110 und 300 zu verwenden und den Schneidstichel unter einen Anstellwinkel zwischen 10° und 20° über die Metallmatrize zu führen. Die Anwendung dieser Lehre ergibt für Videoaufzeichnungen eine gute Qualität.

Die einfache Übertragung dieser Technik auf Schallplatten mit der dort gegenüber Videoaufzeichnungen sehr viel größeren Schnittiefe ist nicht möglich, da der Schneidwiderstand, der gegen den Schneidstichel ausgeübt wird, wesentlich größer ist. Ohne die Anwendung zusätzlicher Maßnahmen ist keine ausreichend gute Oberfläche der Schallrillenwände zu erreichen.

Der Erfindung liegt die Aufgabe zugrunde, die Qualität der Schallaufzeichnung auf metallischen Schneidträgern gegenüber Lackfolien zu verbessern.

Die Aufgabe wird durch die in den Ansprüchen 1 und 10 angegebene Erfindung gelöst. Weitergehende Ausbildungen der Erfindung sind in den Unteransprüchen angegeben.

Die Erfindung ermöglicht gegenüber einer herkömmlichen Aufzeichnung in Lackfolie eine Erhöhung des Störsignalabstandes um mehr als 10 dB. Durch die Ausbildung einer Ultraschallschwingung des Schneidstichels wird der Schneidwiderstand derart verringert, daß eine hohe Güte der Aufzeichnung erreicht wird. Eine selbständige Anregung der Ultraschallfrequenz ergibt automatisch die gewünschte Ultraschallamplitude, d. h. bei geringer Schnittiefe ergibt sich eine kleine Amplitude, bei großer Schnittiefe eine große Amplitude. Bei Schnittiefen unter 10 Mikrometer ist kein Ultraschall feststellbar.

Es ist zwar schon bei Lackfolien bekannt (DE-OS 2 216 051), dem elektromechanischen Wandler des Schreibers neben der Signalfrequenz eine oberhalb der höchsten Frequenz des Signalfrequenzbereiches liegende Frequenz zuzuführen, um die Formtreue und Oberflächengüte zu erhöhen und eine Steigerung der Aufzeichnungsdichte zu ermöglichen. Dieses bekannte Verfahren erfordert jedoch einen erhöhten Aufwand in Form einer separaten Einrichtung zum Zuführen einer Ultraschallfrequenz gegenüber der üblichen Schneidtechnik und löst nicht die der Erfindung zugrunde liegende Aufgabe.

Ein ähnlicher Sachverhalt geht auch aus GB-A-727 424 hervor.

Die Erfindung wird nachstehend an Hand eines Ausführungsbeispiels näher beschrieben. Es zeigt

Fig. 1 eine Darstellung eines Schneidstichels während des Schneidvorganges,

Fig. 2 eine vergrößerte Darstellung eines Schneidstichels während des Schneidvorganges,

Fig. 3 eine Darstellung des am Schneidstichel entstehenden Frequenzspektrums,

Fig. 4 eine Vorderansicht des Schneidstichels und

Fig. 5 eine Seitenansicht des Schneidstichels.

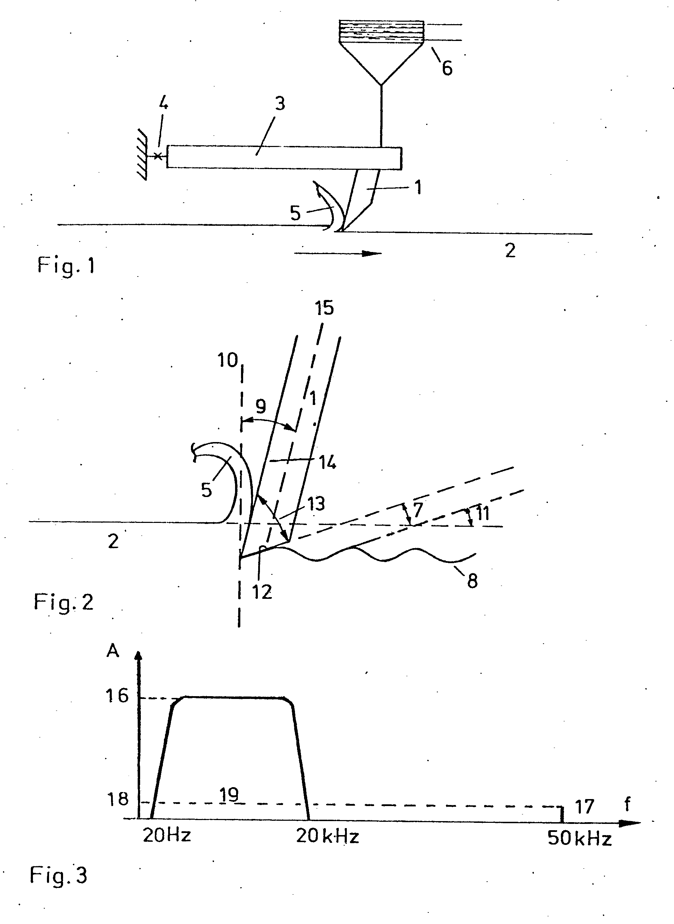

In Fig. 1 ist ein Schneidstichel 1 dargestellt, der an einer Halterung 3 befestigt ist, die in einem Lager 4 frei beweglich aufgehängt ist. Der Schneidstichel 1 wird elektrodynamisch über die Antriebsspule 6 erregt. Der Schneidstichel 1 hat eine solche Lage gegenüber dem Schneidträger 2, daß bei einer Relativbewegung des feststehenden Schneidstichels 1 eine Rille in den Schneidträger 2 geschnitten wird. Die Modulation der Rille durch die aufzuzeichnende Information erfolgt durch elektromagnetische Erregung der nur schematisch dargestellten Spule 6. Beim Schneiden entsteht ein Span 5, der ohne den Schneidvorgang zu stören, zweckmäßig zu entfernen ist.

In Fig. 2 ist der Schneidvorgang in vergrößerter Darstellung gezeigt. Durch den Schneidstichel 1 wird während des Schneidens der Span 5 abgehoben. Die Längsachse 15 des Schneidstichels 1 ist gegenüber der Senkrechten 10 des Schneidträgers 2 um den Winkel 9 angestellt. Zwischen der Rückflanke 12 des Schneidstichels 1 und der Ebene des Schneidträgers 2 befindet sich bei einem bestimmten Anstellwinkel 9 des Schneidstichels 1 gegenüber der Senkrechten 10 ein Keilwinkel 7. Der Keilwinkel 7 darf nicht kleiner werden als es der größte Steigungswinkel 11 der Modulation 8 vorschreibt. Bei Audiofrequenzen beträgt der größte vorkommende Steigungswinkel 11 der Modulation 8 etwa 25°. Der Winkel 13 zwischen der Rückflanke 12 des Schneidstichels 1 zur Vorderkante 14 beträgt ca. 45° bei üblichen Schneidsticheln. Der verbleibende Winkel 9 zur Senkrechten beträgt in die-

sem Beispiel dann noch etwa 20°.

Fig. 3 zeigt ein Frequenzdiagramm der in den Schneidträger geschnittenen Schallschwingungen. Bei einem auf den Schneidträger geschnittenen Rauschsignal, das sich von 20 Hz bis etwa 20 kHz erstreckt, ergibt sich ein Frequenzspektrum 19 mit einer bestimmten Amplitude 16. Wenn diesem aufzuzeichnenden Frequenzspektrum 19 eine Ultraschallfrequenz 17 von etwa 50 kHz überlagert wird, ergibt sich eine fast störungsfreie Aufspeicherung. Die Amplitude 18 der Ultraschallfrequenz 17 ist von der Amplitude 16 des aufgezeichneten Nutzsignals abhängig und liegt im Bereich unter 1 µm.

Die Ultraschallfrequenz 17 wird bei dem genannten relativ großen Anstellwinkel 9 des Schneidstichels 1 gegenüber der Senkrechten 10 des Schneidträgers 2 und einer bestimmten Bemessung der Systemparameter durch das Schneidsystem selbst erzeugt. Dabei hängt die Amplitude 18 der Ultraschallfrequenz 17 von der Schnittiefe des Nutzsignals 19 ab. Bei kleiner Schnittiefe unter 10 µm tritt dann kein merkbarer Ultraschall auf oder ist nicht mehr vorhanden. Die Amplitude 18 nimmt zu, wenn die Schnittiefe des Nutzsignals 19 zunimmt. Die Frequenz der Ultraschallschwingung 17 ergibt sich im wesentlichen aus der Masse und den Federeigenschaften des Schneidstichels 1, der Schneidstichelhalterung 3 sowie dem Material des Schneidträgers 2. Die Erzeugung von Ultraschall ist nach den durchgeführten Untersuchungen nur bei einem metallischen Schneidträger 2 vorteilhaft, insbesondere wenn die Schneidschicht des Schneidträgers 2 Kupfer mit einer Vickershärte von etwa 200 aufweist. Die Amplitude 18 des erzeugten Ultraschalls hängt auch von der Größe des Anstellwinkels 9 ab. Bei einem Winkel von 0° entsteht kein merkbarer Ultraschall.

Der Schneidstichel 1 besteht vorzugsweise aus Diamant. Die Halterung des Schneidstichels 1 muß sehr dämpfungsarm aufgebaut sein. Aus der DE-OS 2 629 492 ist zwar bereits ein Verfahren und ein Gerät zum elektromechanischen Aufzeichnen einer Modulation kurzer Wellenlänge in eine Metallmatrize bekannt, aber bei diesem bekannten Verfahren wird im Gegensatz zur Erfindung gerade versucht, sämtliche Resonanzen, die beim Schneiden zu Frequenzen führen, die nicht mit den Signalfrequenzen übereinstimmen, durch verschiedene Dämpfungsmaterialien auszuschalten. Es wird dort das Entstehen von Ultraschallfrequenzen geradezu verhindert.

Durch den selbsterregten Ultraschall wird der Verspannungsvorgang durch Verringerung des Schneidwiderstandes homogenisiert. Da die erzeugte Ultraschallfrequenz oberhalb, zweckmäßig mindestens doppelt so hoch wie die höchste aufzuzeichnende Frequenz ist, ergibt sich kein störendes Signal bei der Wiedergabe einer nach dem erfindungsgemäßen Verfahren hergestellten Schallplatte.

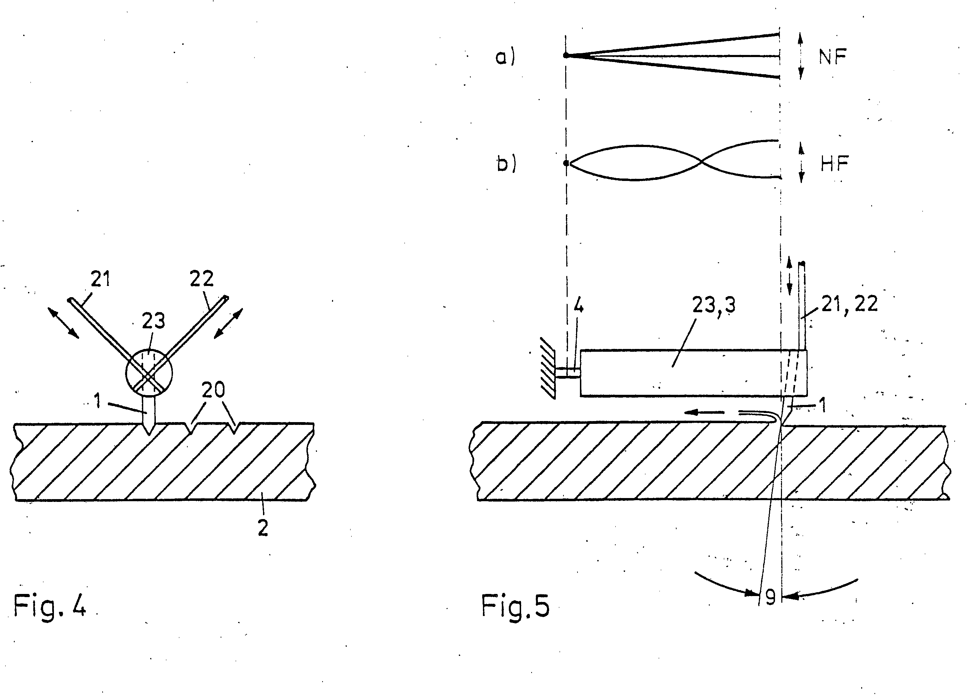

Fig. 4 zeigt eine Ausführungsform des Schneidstichels. In den Aufzeichnungsträger 2 wird mit Hilfe des Schneidstichels 1 eine spiralförmige Spur 20 eingeschnitten. Zur Aufzeichnung von Stereospuren sind zwei antreibende Arme 21 und 22 vorgesehen, die im Winkel von 90° zueinander angeordnet sind. Die Arme 21 und 22 wirken auf ein Aluminium-Rohr 23, das den Schneidstichel 1, der vorteilhaft aus Diamant besteht, trägt.

Fig. 5 zeigt die Anordnung der Schneideinrichtung von der Seite. Die Halterung 3 besteht hier aus dem Aluminium-Rohr 23, das im Lager 4 dämpfungsarm, aber weich aufgehängt ist. Der Schneidstichel 1 ist gegenüber der Senkrechten zum Aufzeichnungsträger um den Anstellwinkel 9 geneigt.

Die dem Schneidstichel über die antreibenden Arme 21 und 22 zugeführte Niederfrequenz (NF) verursacht eine Auslenkung entlang des Aluminium-Rohres entsprechend Fig. 5a. Dieser Auslenkung ist die erzeugte Ultraschallschwingung (HF) überlagert, die entsprechend Fig. 5b entlang des Aluminium-Rohres 23 als Teilresonanz der Schneideinrichtung 1 oder mehr Schwingungsbäuche aufweisen kann. Damit wird die Ultraschallschwingung der NF-Schwingung überlagert und mit auf den Aufzeichnungsträger aufgezeichnet. Die Resonanz entsteht dadurch, daß von der Schneidschicht eine Kraft auf den Schneidstichel ausgeübt wird und diesen zusammen mit dem Rohr 23 in eine Schwingung versetzt.

Metallische Schneidschichten aus Kupfer sind in vorteilhafter Weise für die Erfindung nutzbar. Bei der galvanischen Herstellung einer Schneidschicht aus Kupfer wird das Kupfer mit einer bestimmten Vickershärte abgeschieden. Es hat sich gezeigt, daß die selbständige Erregung einer Ultraschallfrequenz besonders bei einer Vickershärte der Schneidschicht von 160 bis 220 erreicht werden kann, und zwar insbesondere dann, wenn die Schneidschicht im angegebenen Härtebereich nach dem Schneiden der Information noch rekristallisierbar ist.

In einer bevorzugten Ausführungsform der erfindungsgemäßen Anordnung besitzt das verwendete Alminium-Rohr 23 eine Länge von etwa 12 mm bei einem Durchmesser von ungefähr 2,5 mm, der Außendurchmesser des Rohres verjüngt sich an der Aufhängeseite 4 zu einem Durchmesser von etwa 1 mm. Damit ist eine relativ weiche Einspannung gegeben. Bei einer Länge des Diamanten von 2—3 mm mit einer Querschnittsfläche von etwa 0,6 mm² und einer Kupferschneidschicht mit einer Härte von etwa 160 kg/mm² ergibt sich eine Ultraschallschwingung von 60—70 kHz.

## Patentansprüche

1. Einrichtung zum Schneiden einer Information in einen metallischen Schneidträger (2) mit einem elektrodynamisch erregbaren Schneidstichel (1), der eine die aufzuzeichnende Information mechanisch abtastbare Spur in den Schneidträger schneidet, insbesondere zur Herstellung von Schallplatten, wobei der Anstellwinkel (9) zwischen der Längsachse (15) des Schneidstichels (1) und der Senkrechten (10) zur Ebene des Schneidträgers (2) mindestens 10° beträgt, dadurch gekennzeichnet, daß

a) der Anstellwinkel (9) höchstens gleich dem Wert gewählt ist, bei dem gerade noch kein Aufsetzen der Rückflanke (12) des Schneidstichels (1) bei dem größten in der aufzuzeichnenden Information vorkommenden Steigungswinkel (11) der Modulation (8) erfolgt,

b) der Schneidstichel (1), die mit ihm beim Schneidvorgang erregten Teile (3, 6) und der Schneidträger (2) hinsichtlich ihrer Masse und Federeigenschaften derart aufeinander abgestimmt sind, daß durch den Schneidvorgang zur leichteren Überwindung des Schneidwiderstandes eine Schwingung (17) des Schneidstichels angeregt und der aufzuzeichnenden Information überlagert wird, deren Frequenz deutlich höher als die höchste aufzuzeichnende Frequenz der Information ist.

2. Einrichtung nach Anspruch 1, dadurch gekennzeichnet, daß der Winkel (9) zwischen der Längsachse (15) des Schneidstichels (1) und der Senkrechten (10) zur Ebene des Schneidträgers (2) etwa 10—15° beträgt.

3. Einrichtung nach Anspruch 1, dadurch gekennzeichnet, daß die Schwingung (17) mindestens dem Doppelten der höchsten aufzuzeichnenden Frequenz der Information entspricht.

4. Einrichtung nach Anspruch 1, dadurch gekennzeichnet, daß der Schneidstichel (1) aus Diamant besteht.

5. Einrichtung nach Anspruch 1, dadurch gekennzeichnet, daß die Masse des Schneidstichels (1) und der sich mit dem Schneidstichel bewegenden Teile (3, 6) sowie deren Federeigenschaften und die Federeigenschaften des Schneidträgers (2) so bemessen sind, daß eine Ultraschallschwingung von > 40 kHz sich selbst erregt und der Information überlagert ist.

6. Einrichtung nach Anspruch 5, dadurch gekennzeichnet, daß die Schneidschicht des Schneidträgers (2) im wesentlichen aus Kupfer besteht.

7. Einrichtung nach Anspruch 1, dadurch gekennzeichnet, daß die Dämpfung des Schneidstichels und der mit ihm erregten Teile (3, 6) möglichst geringe gewählt ist.

8. Einrichtung nach Anspruch 1, dadurch gekennzeichnet, daß die Schneidschicht des Schneidträgers nach dem Schneiden der Information noch rekristallisierbar ist und die Vickershärte der Schneidschicht beim Schneiden 160 bis 220 k/mm² beträgt.

9. Einrichtung nach Anspruch 8, dadurch gekennzeichnet, daß die Schneidschicht im wesentlichen aus galvanisch hergestelltem Kupfer besteht.

10. Verfahren zum Schneiden einer Information in einen metallischen Schneidträger (2) mit einem elektrodynamisch erregbaren Schneidstichel (1), der eine die aufzuzeichnende Information mechanisch abtastbare Spur in den Schneidträger (2) schneidet, insbesondere zur Herstellung von Schallplatten, wobei der ungeschnittene metallische Schneidträger (2) mit einer vorbestimmten Vickershärte dem Schneidvorgang zugeführt wird, dadurch gekennzeichnet, daß

a) der Schniedvorgang so durchgeführt wird, daß der einzuschneidenden Information eine durch den Schneidvorgang angeregte Schwingung (17) überlagert wird, deren Frequenz deutlich höher ist, als die höchste aufzuzeichnende Frequenz der Information, wobei

b) die Amplitude der überlagerten Schwingung durch Bemessung und Einstellung der Masse und Federeigenschaften des Schneidstichels (1), der mit ihm beim Schneidvorgang erregten Teile (3, 6) und des Schneidträgers (2) von der Schnittiefe der aufzuzeichnenden Information abhängt, derart, daß der Schneidwiderstand durch die angeregte Schwingung (17) leichter überwunden wird.

11. Verfahren nach Anspruch 10, dadurch gekennzeichnet, daß die Vickershärte des Materials des Schneidträgers (2) 160 bis 220 beträgt.

**Claims**

1. Arrangement for cutting information in a metallic cuttable carrier (2) by means of an electrodynamically controllable cutting stylus (1) which cuts a track in the cuttable carrier from which the information to be recorded can be picked off, especially for the manufacture of sound racords, in which the angle of inclination (9) between the longitudinal axis (15) of the cutting stylus (1) and the perpendicular (10) to the plane of the cuttable carrier (2) amounts at least to 10° characterized in that

a) the angle of inclination (9) is selected to be equal, at its greatest, to the value at which just no interference ensues with the rear flank (12) of the cutting stylus on the occurrence of the highest slope (11) of the modulation (8) arising from the information to be recorded,

b) the cutting stylus (1), the parts (3, 6) controlled with it during the cutting operation and the cuttable carrier (2) are relatively disparate as regards their masses and resilient properties in such a way that during the cutting process, for the purpose of easily overcoming the cutting resistance, there is induced and superimposed on the information to be recorded an oscillation (17) of the cutting stylus, which is significantly higher than the highest frequency of the information to be recorded.

2. Arrangement according to claim 1, characterized in that the angle (9) between the longitudinal axis (15) of the cutting stylus (1) and the perpendicular (10) to the plane of the cuttable carrier amounts to around 10—15°.

3. Arrangement according to claim 1, characterized in that the oscillation (17) corresponds at least to double the highest to be recorded frequency of the information.

4. Arrangement according to claim 1, characterized in that the cutting stylus (1) is composed of diamond.

5. Arrangement according to claim 1, characterized in that the masses of the cutting stylus (1) and of the parts (3, 6) which move with the cutting stylus, and also their resilient characteristics and the resilient characteristics of the cuttable carrier (2) are so dimensioned that an ultrasonic oscillation of higher than 40 kHz is self-excited and superimposed on the information.

6. Arrangement according to claim 5, characterized in that the cut layer of the cuttable carrier (2) consists essentially of copper.

7. Arrangement according to claim 1, characterized in that the damping of the cutting stylus and of the parts which are controlled with it is chosen to be as low as possible.

8. Arrangement according to claim 1, characterized in that the cut layer of the cuttable carrier is still recrystallisable after the cutting of the information and the Vickers hardness of the cut layer on cutting amounts to 160 to 220 kg/mm².

9. Arrangement according to claim 8, characterized in that the cut layer consists essentially of galvanically deposited copper.

10. Process for the cutting of information in a metallic cuttable carrier (2) by means of an electrodynamically controllable cutting stylus (1) which cuts a track in the cuttable carrier from which the information to be recorded can be picked off, especially for the manufacture of sound records, in which the uncut metallic cuttable carrier (2) is provided for the cutting operation with a predetermined Vickers hardness, characterized in that

a) the cutting operation is carried out in such a way that an oscillation (17), induced by the cutting operation, is superimposed on the information to be cut, the frequency of which oscillation is significantly higher than the highest frequency of the information to be cut, in connection with which

b) the amplitude of the superimposed oscillation depends on the depth of cut of the information to be recorded, by reason of dimensioning and setting of the masses and resilient characteristics of the cutting stylus (1), of the parts (3, 6) controlled with it during the cutting operation, and of the cuttable carrier (2), in such a way that the cutting resistance is easily overcome by reason of the induced oscillation.

11. Process according to claim 10, characterized in that the Vickers hardness of the material of the cuttable carrier (2) amounts to 160 to 220.

## Revendications

1. Dispositif de gravure d'une information sur un support métallique (2) au moyen d'un burin (1) qui, excité électrodynamiquement, grave sur le support l'information à enregistrer sous forme d'une piste lisible mécaniquement, pour la production d'audiodisques en particulier, l'angle d'inclinaison (9) entre l'axe longitudinal (15) du burin (1) et la perpendiculaire (10) au plan du support de gravure (2) étant au moins égal à 10°, ledit dispositif étant caractérisé en ce que

a) l'angle d'inclinaison (9) est au maximum égal à la valeur pour laquelle le flanc arrière (12) du burin (1) ne vient pas en contact avec le support pour l'angle de pas (11) maximal de la modulation (8) apparaissant dans l'information à enregistrer; et

b) la masse et les propriétés élastiques du burin (1), des pièces (3, 6) excitées avec ce dernier lors de l'opération de gravure, et du support de gravure (2) sont adaptées de façon que pour vaincre plus facilement la résistance de gravure, l'opération de gravure excite une oscillation (17) du burin, qui est superposée à l'information à enregistrer et dont la fréquence est nettement supérieure à la fréquence maximale de l'information à enregistrer.

2. Dispositif selon la revendication 1, caractérisé en ce que l'angle formé par l'axe longitudinal (15) du burin (1) et la perpendiculaire (10) au plan du support de gravure (2) est d'environ 10—15°.

3. Dispositif selon revendication 1, caractérisé en ce que l'oscillation (17) est au moins égale au double de la fréquence maximale de l'information à enregistrer.

4. Dispositif selon revendication 1, caractérisé en ce que le burin (1) est en diamant.

5. Dispositif selon revendication 1, caractérisé en ce que la masse du burin (1) et des pièces (3, 6) mobiles avec ce dernier, ainsi que leurs propriétés élastiques et celles du support de gravure (2) sont dimensionnées de façon qu'une oscillation ultrasonore > 40 kHz s'autoexcite et se superpose à l'information.

6. Dispositif selon revendication 5, caractérisé en ce que la couche gravée du support (2) est essentiellement en cuivre.

7. Dispositif selon revendication 1, caractérisé par un amortissement minimal du burin et des pièces (3, 6) excitées avec ce dernier.

8. Dispositif selon revendication 1, caractérisé en ce que la couche gravée du support est recristallisable après la gravure de l'information et sa dureté Vickers est de 160 à 220 kg/mm² pendant la gravure.

9. Dispositif selon revendication 8, caractérisé en ce que la couche gravée est essentiellement constituée par du cuivre déposé galvaniquement.

10. Procédé de gravure d'une information sur un support métallique (2) par un burin (1) excité électrodynamiquement, qui grave sur le support (2) l'information à enregistrer sous forme d'une piste lisible mécaniquement, en particulier pour la production d'audiodisques, le support métallique (2) non gravé présentant une dureté Vickers prédéterminée, ledit dispositif étant caractérisé en ce que

a) l'opération de gravure est effectuée de façon à superposer à l'information à graver une oscillation (17) excitée par l'opération de gravure et dont la fréquence est nettement supérieure à la fréquence maximale de l'information à enregistrer; et

b) par suite du dimensionnement et du réglage de la masse et des propriétés élastiques du burin (1), des pièces (3, 6) excitées avec ce dernier pendant l'opération de gravure, et du support de gravure (2), l'amplitude de l'oscillation superposée dépend de la profindeur de gravure de l'information à enregistrer, de façon que la résistance de gravure soit plus facilement surmontée par l'oscillation excitée (17).

11. Procédé selon revendication 10, caractérisé en ce que la dureté Vickers du matériau du support de gravure (2) est comprise entre 160 et 220.

Fig. 1

Fig. 2

Fig. 3

Fig. 4

Fig. 5

a)          NF

b)          HF